# EUROPÄISCHE PATENTANMELDUNG

(11) **EP 3 489 872 A1**
(43) Veröffentlichungstag der Anmeldung: **29.05.2019**
(21) Anmeldenummer: 17203385.4
(22) Anmeldetag: 23.11.2017
(51) Int. Cl.: G06Q 10/08, G06Q 10/00

(54) **SENSORANORDNUNG**

(71) Anmelder: Leuze electronic GmbH + Co. KG, 73277 Owen/Teck (DE)
(72) Erfinder: KÖBEL, Herbert, 73277 Owen/Teck (DE); QUAPIL, Gerald, 73277 Owen/Teck (DE)
(74) Vertreter: Ruckh, Rainer Gerhard

(57) **Zusammenfassung**

Die Erfindung betrifft eine Sensoranordnung mit einer Datenbrille (3), welche Mittel zur Entfernungsbestimmung und zur Bildaufnahme innerhalb eines Raumbereichs, sowie eine Projektionseinheit (6) und eine Steuer- und Auswerteeinheit (8) umfasst. Die Sensoranordnung umfasst wenigstens einen Sensor (1), wobei der in einem Umgebungsbild der Datenbrille (3) sichtbare Sensor (1) mittels der Mittel zur Entfernungsbestimmung und zur Bildaufnahme identifiziert ist, und wobei mittels der Projektionseinheit (6) sensorspezifische Informationen dieses Sensors (1) in das Umgebungsbild projiziert und angezeigt sind.

## Beschreibung

Die Erfindung betrifft eine Sensoranordnung.

Sensoranordnungen, auf welche sich die vorliegende Erfindung bezieht, umfassen wenigstens einen Sensor, der zur Objektdetektion eingesetzt wird. Derartige Sensoren können als induktive oder kapazitive Sensoren oder auch als Radar- oder Ultraschallsensoren ausgebildet sein. Insbesondere können die Sensoren als optische Sensoren ausgebildet sein.

Für den Einsatz in einer bestimmten Applikation ist im Allgemeinen eine Einstellung eines bestimmten Arbeitszustandes des Sensors erforderlich, insbesondere durch Vorgabe von Parametern.

Eine Bedienperson, welche die Applikation kontrollieren möchte, kann den Arbeitszustand des Sensors nicht ohne weiteres erkennen, sodass eine Kontrolle, ob der Arbeitszustand des Sensors für die jeweilige Applikation korrekt ist, erschwert ist.

Ein Beispiel hierfür ist ein optischer Sensor in Form eines Barcodelesegerätes. Mit diesem Barcodelesegerät können Barcodes innerhalb eines bestimmten Abstandsbereichs, das heißt dem Lesebereich, erfasst und dekodiert werden. Dieser Lesebereich ist abhängig von der optischen Auslegung des Gerätes sowie von der Modulgröße Typ des zu erfassenden Barcodes. Um festzustellen, ob in einer Applikation, in welcher ein bestimmter Barcodetyp erfasst werden soll, der Lesebereich des Barcodelesegerätes korrekt gewählt ist, muss ein Benutzer typischerweise ein Handbuch zu Rate ziehen, was äußerst umständlich ist.

Ein weiteres Beispiel ist ein optischer Sensor in Form eines Sicherheitssensors, der zur Gefahrenbereichsüberwachung im Bereich der Sicherheitstechnik eingesetzt wird. Der optische Sensor kann beispielsweise als 3D-Kamerasensor oder als scannender Distanzsensor ausgebildet sein. Für einen derartigen optischen Sensor wird dann ein Schutzfeld definiert, wobei im Überwachungsbetrieb des optischen Sensors geprüft wird, ob ein Objekt in das Schutzfeld eingedrungen ist. Ein Problem hierbei besteht darin, dass dieses Schutzfeld ein reiner Parameter ist, das heißt eine Rechengröße, die für einen Benutzer nicht sichtbar ist. Der Benutzer kann damit nicht visuell kontrollieren, ob mit dem Schutzfeld tatsächlich ein Gefahrenbereich an einer Maschine oder dergleichen vollständig überwacht wird.

Aus der EP 2 549 431 B1 ist ein derartiger optischer Sensor in Form eines 3D-Kamerasystems bekannt, welches einen 3D-Bildsensor zur Erzeugung einer Tiefenkarte und einen 2D-Bildsensor zur Erzeugung eines Hintergrundbildes aufweist. Aus der Tiefenkarte und dem Hintergrundbild kann ein Fusionsbild erzeugt werden. In diesem Fusionsbild können die Grenzen von Schutzfeldern festgelegt und auch visualisiert werden.

Die Implementierung einer Visualisierung von Schutzfeldern setzt eine Ausbildung des Sensors als Kamerasystem voraus. Zudem ist ein äußerst aufwändiger Aufbau des Kamerasystems erforderlich, um einerseits eine Tiefenkarte und andererseits ein Hintergrundbild erzeugen zu können, wobei darüber hinaus noch ein Fusionsbild aus der Tiefenkarte und dem Hintergrundbild erzeugt werden muss.

Der Erfindung liegt die Aufgabe zugrunde, eine Sensoranordnung bereitzustellen, welche auf einfache Weise modellierbar, konfigurierbar und kontrollierbar ist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft eine Sensoranordnung mit einer Datenbrille, welche Mittel zur Entfernungsbestimmung und zur Bildaufhahme innerhalb eines Raumbereichs umfasst. Weiterhin umfasst die Datenbrille eine Projektionseinheit und eine Steuer- und Auswerteeinheit. Die Sensoranordnung umfasst weiterhin wenigstens einen Sensor. Der in einem Umgebungsbild der Datenbrille sichtbare Sensor ist mittels den Mitteln zur Entfernungsbestimmung und zur Bildaufnahme identifiziert. Mittels der Projektionseinheit sind sensorspezifische Informationen dieses Sensors in das Umgebungsbild projiziert und angezeigt.

Mit der Datenbrille können auf einfache Weise sensorspezifische Informationen eines Sensors damit wesentliche Kenngrößen für die jeweilige Applikation visualisiert werden, wodurch ein Benutzer die Applikation des Sensors auf einfache Weise kontrollieren kann.

Ein wesentlicher Vorteil der Erfindung besteht darin, dass mit der Datenbrille sensorspezifische Informationen beliebiger, unterschiedlich ausgebildeter Sensoren angezeigt werden können, das heißt die Datenbrille ist universell für beliebige Sensoranordnungen einsetzbar. Die Sensoren können dabei induktive, kapazitive oder optische Sensoren sein. Auch können die Sensoren als Radarsensoren oder Ultraschallsensoren ausgebildet sein.

Ein wesentlicher Aspekt hierbei ist, dass die Datenbrille selbsttätig den jeweiligen Sensor eindeutig identifizieren kann. Hierzu weist die Datenbrille Mittel zur Positions-, Lage- und Entfernungsbestimmung sowie zur Bildaufnahme auf. Mit diesen Mitteln zur Entfernungsbestimmung und zur Bildaufhahme kann der Sensor anhand seiner Form, Geometrie, Größe und gegebenenfalls Farbe identifiziert werden. Zusätzlich kann der Sensor auch eine Markierung, die den Sensor eindeutig kennzeichnet, aufweisen, welche von den Mitteln zur Entfernungsbestimmung und zur Bildaufnahme erfasst werden kann.

Anhand der vorgenommenen Identifizierung können für diesen Sensor die passenden sensorspezifischen Informationen ausgewählt und angezeigt werden. Da mit den Mitteln zur Entfernungsbestimmung und zur Bildaufnahme die Raumposition des Sensors erfasst wird, werden die sensorspezifischen Informationen so angezeigt, dass sie in das Umgebungsbild der Datenbrille so eingeblendet werden, dass sie in enger räumlicher Zuordnung zum Sensor erscheinen. Wenn es sich um geometrische Kenngrößen wie Reichweiten, Schutzfelder, Lesebereiche eines Sensors handelt, werden diese hinsichtlich Abstand, Größe und Orientierung in der richtigen Perspektive des Benutzers, das heißt des Trägers der Datenbrille angezeigt.

Bei einem als Barcodelesegerät ausgebildeten optischen Sensor kann beispielsweise dessen Lesebereich im mit der Datenbrille erfassten Umgebungsbild eingeblendet werden.

Bei einem Sensor in Form eines Sicherheitssensors zur Gefahrenbereichsüberwachung, kann ein aktuell eingestelltes Schutzfeld und gegebenenfalls ein diesem zugeordnetes Warnfeld im Umgebungsbild angezeigt werden.

Auch können maximal mögliche Ausdehnungen von Schutzfeldern oder Warnfeldern angezeigt werden, um dem Benutzer so die Konfigurierung dieser Schutzfelder oder Warnfelder zu erleichtern.

Bei einem Sensor in Form eines Distanzsensors können Messbereiche, wie zum Beispiel ein Nahbereich und ein Fernbereich angezeigt werden. Zudem können als Zahlenwerte bei einer Objektdetektion ermittelte Distanzwerte und Standardabweichungen angezeigt werden.

Bei einem Sensor in Form eines Lichttasters kann dessen Tastweite angezeigt werden.

Anhand der angezeigten sensorspezifischen Informationen kann der Benutzer ohne weitere Hilfsmittel wie Handbücher und dergleichen den Betrieb des Sensors überprüfen und kontrollieren.

Gemäß einer vorteilhaften Ausführungsform der Erfindung ist dem Sensor wenigstens ein Applikationsobjekt zugeordnet. Das in einem Umgebungsbild der Datenbrille sichtbare Applikationsobjekt ist mittels den Mitteln zur Entfernungsbestimmung und zur Bildaufhahme identifiziert. Mittels der Projektionseinheit sind applikationsobjektspezifische Information in das Umgebungsbild projiziert und angezeigt.

Durch die Erfassung und Identifizierung eines Sensors und eines diesem zugeordneten Applikationsobjekts, das allgemein zur Objektdetektion mit dem Sensor dient oder selbst ein mit dem Sensor zu erfassendes Objekt ist, kann eine Sensorapplikation vollständig erfasst werden. Da nicht nur sensorspezifische Informationen sondern auch applikationsobjektspezifische Informationen im Umgebungsbild der Datenbrille angezeigt werden, erhält der Benutzer auch vollständige visuelle Informationen in das Umgebungsbild der Datenbrille eingeblendet und ist so vollständig über die gesamte Applikation informiert.

Bei einem Applikationsobjekt kann es sich beispielsweise um einen Reflektor handeln, dem ein optischer Sensor zugeordnet ist, der in Form einer Reflexionslichtschranke ausgebildet ist. In diesem Fall können mit der Datenbrille als sensorspezifische Informationen Parameterwerte der Reflexionslichtschranke angezeigt werden, wie zum Beispiel die Reichweite oder Funktionsreserve bei der Objektdetektion. Als applikationsobjektspezifische Informationen des Reflektors können dessen Typ, Größe und Qualität angezeigt werden.

Bei einem optischen Sensor in Form eines Barcodelesegerätes kann das Applikationsobjekt von einem zu detektierenden Barcode gebildet sein, so dass als applikationsobjektspezifische Information beispielsweise die Codeart des Barcodes angezeigt wird. Als sensorspezifische Information kann der Lesebereich, der an den Barcode angepasst sein muss, als in das Umgebungsbild eingefügtes Feld angezeigt werden.

Weiterhin können Applikationsobjekte auch als Testobjekte für die Überprüfung der Sensorfunktion des Sensors ausgebildet sein. Je nach Ausbildung des Sensors können die Testobjekte bestimmte Farben, Graustufen, Glanzgrade oder Oberflächeneigenschaften für die Reflexion von Radarstrahlen, Ultraschallwellen oder dergleichen aufweisen.

Gemäß einer vorteilhaften Ausführungsform sind der Sensor und das Applikationsobjekt in einem oder in verschiedenen Umgebungsbildern sichtbar.

Diese Relativlagenbestimmung ist besonders einfach durchführbar, wenn der Sensor und das Applikationsobjekt im gleichen Umgebungsbild der Datenbrille sichtbar sind. Jedoch kann die Relativlagenbestimmung auch dann erfolgen, wenn der Sensor und das Applikationsobjekt nur in verschiedenen Umgebungsbildern sichtbar sind. In diesem Fall wird bei einem Schwenk des Benutzers mit der Datenbrille unter Zuhilfenahme der Bildinformationen in den einzelnen Bildinformationen eine Relativlagenbestimmung im Sensor und Applikationsobjekt durchgeführt.

Diese Relativlageninformationen können als sensorspezifische Informationen beziehungsweise applikationsobjektspezifische Informationen in das jeweilige Umgebungsbild eingeblendet werden. Diese Informationen können insbesondere für eine Justage und Ausrichtung des Sensors relativ zum Applikationsobjekt genutzt werden.

Gemäß einer besonders zweckmäßigen Ausgestaltung sind die Mittel zur Entfernungsbestimmung und zur Bildaufhahme von einer 3D-Kamera sowie einer Farbkamera gebildet.

Prinzipiell kann anstelle einer Farbkamera auch eine Schwarz-Weiß-Kamera eingesetzt werden.

Gemäß einer vorteilhaften Ausführungsform weist die Datenbrille eine Schnittstelle zum Anschluss an eine externe Einheit in einem Datennetzwerk auf.

Insbesondere weist die Schnittstelle eine Kommunikationseinheit zum Anschluss an das Internet auf.

Die externe Einheit kann in diesem Fall von einer Cloud gebildet sein. Zusätzlich kann die Schnittstelle eine Datenverbindung zwischen der Datenbrille und dem Sensor ausbilden.

Der Anschluss an externe Einheiten kann insbesondere als Zugang zu dort hinterlegten sensorspezifischen Informationen beziehungsweise applikationsobjektspezifischen Informationen genutzt werden.

Besonders vorteilhaft ist eine Datenmodelleinheit zur Vorgabe von sensorspezifischen Informationen vorgesehen.

Zweckmäßig sind zudem mittels der Datenmodelleinheit applikationsobjektspezifische Informationen vorgebbar.

Dabei weist die Datenmodelleinheit eine Datenbank zur Speicherung von Informationen und/oder eine Berechnungseinheit zur Berechnung von Informationen auf.

Generell kann die Datenmodelleinheit in der Datenbrille, in dem Sensor oder in einer externen Einheit vorgesehen sein.

Für den Fall, dass sich die Datenmodelleinheit im Sensor selbst befindet, sind die diesen Sensor betreffenden sensorspezifische Informationen dort hinterlegt oder werden dort berechnet. Über die Kommunikationseinheit kann die Datenbrille diese sensorspezifischen Informationen abrufen und dann anzeigen.

Wird eine Datenmodelleinheit in einer Cloud genutzt, gibt die Datenbrille die Identifikation des erfassten Sensors an die Cloud weiter und kann dann von der Datenmodelleinheit die für diesen Sensor hinterlegten oder berechneten sensorspezifischen Informationen abrufen. Bei der Identifikation des Sensors mit der Datenbrille wird mittels den Mitteln zur Entfernungsbestimmung und zur Bildaufhahme insbesondere auch der Ort des Sensors erfasst, wobei diese Informationen in der Cloud genutzt werden. Entsprechendes gilt für applikationsobjektspezifische Informationen.

Ist die Datenmodelleinheit nicht in eine Cloud sondern in einer sonstigen externen Einheit integriert, muss der Ort der Datenbrille an die Datenmodelleinheit weitergegeben werden. Hierzu kann der Datenbrille eine Eingabeeinheit zugeordnet sein.

Generell können im Sichtfeld der Datenbrille mehrere Sensoren vorhanden sein. Der Benutzer kann dann wenigstens einen Sensor anwählen, für welchen sensorspezifische Informationen angezeigt werden.

Im einfachsten Fall sind mittels der Datenbrille unterschiedliche Sensoren zur Auswahl angezeigt.

Alternativ oder zusätzlich ist der Datenbrille eine Eingabeeinheit zugeordnet.

Ebenso kann die Datenbrille durch Gesten steuerbar sein.

In diesen Fällen ist mittels der Eingabeeinheit und/oder der Gestensteuerung ein Sensor auswählbar.

Vorteilhaft wird über die Kommunikationseinheit eine direkte Kommunikation zwischen der Datenbrille und einem ausgewählten Sensor aufgebaut. Alternativ kann die Kommunikation über das Internet aufgebaut werden, wobei die Cloud als Zwischenspeicher verwendet werden kann. Der Sensor kann dann relevante Informationen zur Bestimmung von sensorspezifischen Informationen und gegebenenfalls applikationsobjektspezifischen Informationen eines zugeordneten Applikationsobjekts an die Datenmodelleinheit weiterleiten, wo die sensorspezifischen Informationen und applikationsobjektspezifischen Informationen berechnet werden.

Die mit der Datenbrille visualisierten sensorspezifischen Informationen und/oder applikationsobjektspezifischen Informationen können Sensoren und Applikationsobjekte unterschiedlichster Ausprägungen beschreiben, wobei hierzu die sensorspezifischen Informationen beziehungsweise applikationsobjektspezifischen Informationen entsprechend unterschiedlich ausgebildet sein können.

Beispielsweise kann mittels der Eingabeeinheit und/oder der Gestensteuerung ein Sensor auswählbar sein.

Bei einem optischen Sensor in Form einer Reflexionslichtschranke kann als Sensorparameter die Reichweite oder die Funktionsreserve als Parameter angezeigt werden.

Bei einem optischen Sensor in Form eines Lichttasters kann dessen Tastweite als Parameter angezeigt werden.

Weiter vorteilhaft sind als sensorspezifische Informationen Arbeitszustände des Sensors dargestellt.

Für einen optischen Sensor in Form eines Lichtvorhangs, der eine Mehrzahl von Lichtstrahlen emittierenden Sendern und Lichtstrahlen empfangenden Empfängern aufweist, wobei jeweils ein Sender und ein zugeordneter Empfänger eine Strahlachse ausbilden, können unterschiedliche Arbeitszustände durch Kennzeichnung bestimmter Strahlachsen angezeigt werden. Diese Arbeitszustände können von einem statischen oder dynamischen Blanking gebildet sein, bei welchem bestimmte Strahlachsen ausgeblendet, das heißt nicht zur Objektdetektion herangezogen werden. Weiterhin kann ein Muting des Lichtvorhangs, bei welchen vorgegebene Strahlachsen stummgeschaltet werden, visualisiert werden. Schließlich können unterbrochene oder teilunterbrochene Strahlachsen während des Betriebs des Lichtvorhangs visualisiert werden.

Bei einem als Barcodelesegerät ausgebildeten optischen Sensor können unterschiedliche Arbeitszustände durch unterschiedliche Darstellungen des Lesebereichs des Barcodelesegerätes dargestellt werden. So können ein Ruhezustand und die Aktivierung des Barcodelesegerätes zur Codedetektion durch unterschiedliche Farbdarstellungen des Lesebereichs visualisiert werden.

Weiter vorteilhaft ist mittels sensorspezifischer Informationen und/oder applikationsobjektspezifischer Informationen eine Ausrichtung eines Sensors und/oder eines Applikationsobjekts durchführbar.

Hier wird vorteilhaft ausgenutzt, dass mit den Mitteln zur Entfernungsbestimmung und zur Bildaufhahme der Abstand und die Relativlage eines Sensors und eines Applikationsobjekts bestimmt werden kann.

Als Ausrichthilfe kann beispielsweise ein maßstäbliches Gitter oder Rastermaß in den Bereich zwischen Sensor und Applikationsobjekt eingeblendet werden. Der Benutzer kann dadurch Entfernungen zwischen dem Sensor und applikationsobjektspezifischen Informationen ablesen.

Bei einem Ausrichtvorgang können mit der Datenbrille Lageänderungen zwischen Sensor und applikationsobjektspezifischen Informationen fortlaufend kontrolliert werden.

Weiter vorteilhaft bilden sensorspezifische Informationen und/oder applikationsobjektspezifische Informationen Diagnosedaten.

Beispielsweise kann die Justagequalität der Ausrichtung eines Applikationsobjekts relativ zu einem Sensor durch farbliche Darstellungen visualisiert werden.

Weiter vorteilhaft ist in einem Kalibriermodus die Datenbrille kalibrierbar.

Eine Kalibrierung kann insbesondere dann erfolgen, wenn der Benutzer eine Abweichung von visualisierten geometrischen sensorspezifischen Informationen und tatsächlichen Sensorgrößen, wie zum Beispiel sichtbaren Lichtstrahlen, feststellt. In diesem Fall kann durch Eingabe von Befehlen in die Datenbrille, beispielsweise durch Eingabe von Sprachbefehlen, die virtuelle Darstellung von sensorspezifischen Informationen korrigiert werden.

Die Erfindung wird im Folgenden anhand der Zeichnungen erläutert. Es zeigen:
- Figur 1:: Schematische Darstellung eines Ausführungsbeispiels der erfindungsgemäßen Sensoranordnung.
- Figur 2:: Einzeldarstellung einer Datenbrille der Sensoranordnung gemäß Figur 1.
- Figur 3:: Darstellung eines Modells einer Datenkommunikation für die Sensoranordnung gemäß Figur 1.
- Figur 4:: Beispiel einer Sensoranordnung mit einem Sicherheitssensor.
- Figur 5:: Beispiel einer Sensoranordnung mit einem Barcodelesegerät.
- Figur 6:: Beispiel einer Sensoranordnung mit einer Reflexionslichtschranke.

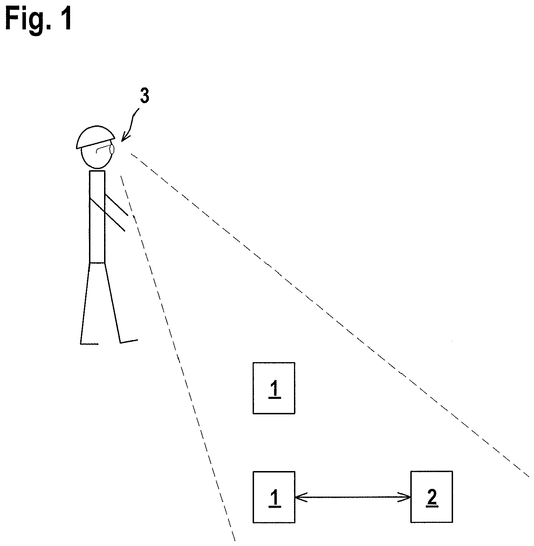

Figur 1 zeigt schematisch ein Ausführungsbeispiel der erfindungsgemäßen Sensoranordnung.

Die Sensoranordnung weist zwei Sensoren 1 auf, wobei einem der Sensoren 1 ein Applikationsobjekt 2 zugeordnet ist. Die Sensoren 1 sind im vorliegenden Fall als Distanzsensoren ausgebildet, insbesondere als optische Distanzsensoren. Das Testobjekt kann ein Objekt mit einer bestimmten Oberflächenreflektivität sein.

Die Sensoranordnung umfasst weiterhin eine Datenbrille 3, die, wie Figur 1 zeigt, von einem Benutzer getragen wird. In Figur 1 ist gestrichelt das Sichtfeld der Datenbrille 3 eingetragen. In diesem Sichtfeld liegen die Sensoren 1 und das Applikationsobjekt 2, das heißt in der in Figur 1 dargestellten Blickrichtung sieht der Benutzer mit der Datenbrille 3 ein Umgebungsbild, in welchem die Sensoren 1 und das Applikationsobjekt 2 vorhanden sind.

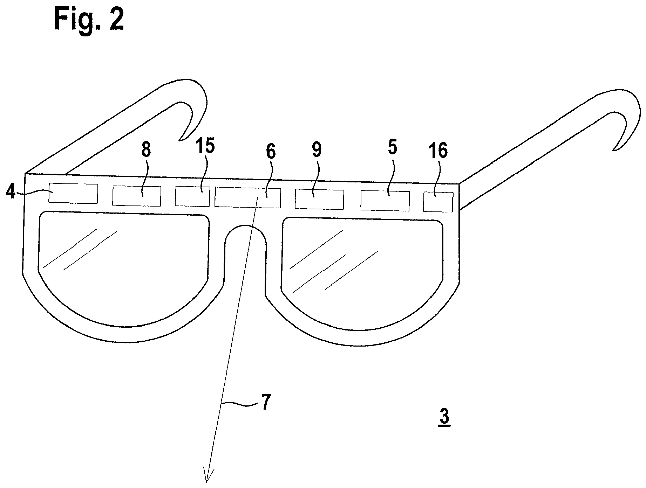

Figur 2 zeigt schematisch den Aufbau der Datenbrille 3. Die Datenbrille 3 umfasst als Mittel zur Entfernungsbestimmung und zur Bildaufnahme eine 3D-Kamera 4 und eine Farbkamera 5. Die 3D-Kamera 4 kann Entfernungsmessungen durchführen, so dass mit der 3D-Kamera 4 Positions-, Lage- und Entfernungsbestimmungen in einem Raumbereich möglich sind. Anstelle der Farbkamera 5 kann auch eine Schwarz-Weiß-Kamera vorgesehen sein. Weiterhin umfasst die Datenbrille 3 eine Projektionseinheit 6 zur Projektion von Informationen in das Umgebungsbild mittels sichtbarer Lichtstrahlen 7 in das Auge des Betrachters.

Die Datenbrille 3 umfasst zudem eine Steuer- und Auswerteeinheit 8, die eine Rechnereinheit wie einen Mikroprozessor und eine Speichereinheit umfasst. Die Steuer- und Auswerteeinheit 8 dient zur Steuerung aller Elektronikkomponenten der Datenbrille 3. Zudem erfolgt in der Steuer- und Auswerteeinheit 8 die Auswertung der Messwerte der 3D-Kamera 4 und der Farbkamera 5.

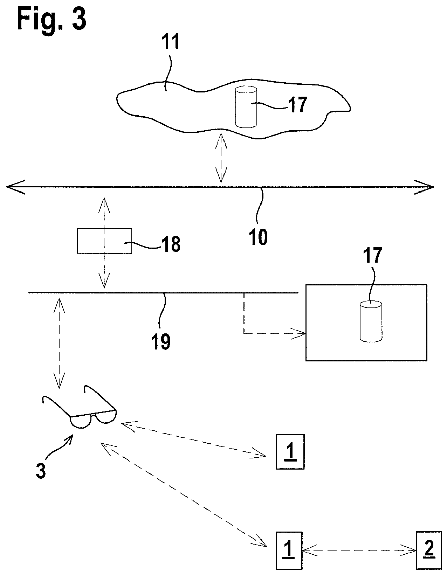

Weiterhin umfasst die Datenbrille 3 eine Schnittstelle 9 zum Anschluss an externe Einheiten. Ein entsprechendes Kommunikationsmodell zeigt Figur 3.

Das Kommunikationsmodell umfasst ein externes Datennetzwerk wie das Internet 10, das über eine Firewall 18 mit einem internen Datennetzwerk 19 verbunden ist.

Die Schnittstelle 9 umfasst eine Kommunikationseinheit zum Anschluss an das Internet 10, wobei die Datenbrille 3 dadurch mit einer Cloud 11 kommunizieren kann. Weiterhin ist die Schnittstelle 9 ausgebildet, um mit den Sensoren 1 Daten auszutauschen.

Im vorliegenden Fall ist in der Cloud 11 eine externe Datenmodelleinheit 17 hinterlegt, die eine Datenbank und eine Berechnungseinheit aufweist. Alternativ ist eine externe Datenmodelleinheit 17 an das interne Datennetzwerk 19 angeschlossen. Prinzipiell könnte eine interne Datenmodelleinheit 15 auch in der Steuer- und Auswerteeinheit 8 der Datenbrille 3 hinterlegt sein (Figur 2).

Sieht der Benutzer, wie in Figur 1 dargestellt, mehrere Sensoren 1 im Umgebungsbild der Datenbrille 3, so kann er einen Sensor 1 auswählen, für welchen mit der Projektionseinheit 6 sensorspezifische Informationen angezeigt werden, indem sie in das Umgebungsbild projiziert werden.

Die Auswahl kann dadurch erfolgen, dass die Datenbrille 3 die Sensoren 1 zur Auswahl anzeigt. Eine Auswahl kann dann mit einer Gestensteuerung der Datenbrille 3 erfolgen. Alternativ kann die Datenbrille 3 hierzu eine Eingabeeinheit 16 aufweisen.

Wählt der Benutzer den Sensor 1 mit dem zugeordneten Applikationsobjekt 2 aus, so können auch mittels dem Applikationsobjekt 2 applikationsobjektspezifische Informationen visualisiert werden.

Mit den Mitteln zur Entfernungsbestimmung und zur Bildaufhahme wird der Abstand zwischen dem Sensor 1 und dem Applikationsobjekt 2 bestimmt. Auch diese Informationen können insbesondere zur Ausrichtung des Sensors 1 relativ vom Applikationsobjekt 2 mit der Projektionseinheit 6 visualisiert werden.

Generell wird nach Auswahl eins Sensors 1 dieser mit der Datenbrille 3, insbesondere den Mitteln zur Entfernungsbestimmung und zur Bildaufhahme eindeutig identifiziert. Die Identifizierung kann durch Erfassung der Größe, Form, Farbe des Sensors 1 erfolgen. Alternativ oder zusätzlich wird mit den Mitteln zur Entfernungsbestimmung und zur Bildaufhahme eine Markierung am Sensor 1 erfasst, welche diesen kennzeichnet.

Nachdem der Sensor 1 so identifiziert wurde, werden aus der Datenmodelleinheit 15, 17 die für diesen Sensor 1 spezifischen Informationen wie Kommunikationsmerkmale zum Sensor und gegebenenfalls die zugeordneten applikationsobjektspezifischen Informationen ausgelesen, wobei diese oder ein Teil hiervon mittels der Projektionseinheit 6 im Umgebungsbild visualisiert werden. Im einfachsten Fall sind die sensorspezifischen Informationen und applikationsobjektspezifischen Informationen in der Datenbank der Datenmodelleinheit 15, 17 abgespeichert. Alternativ werden diese Informationen in der Berechnungseinheit der Datenmodelleinheit 15, 17 berechnet.

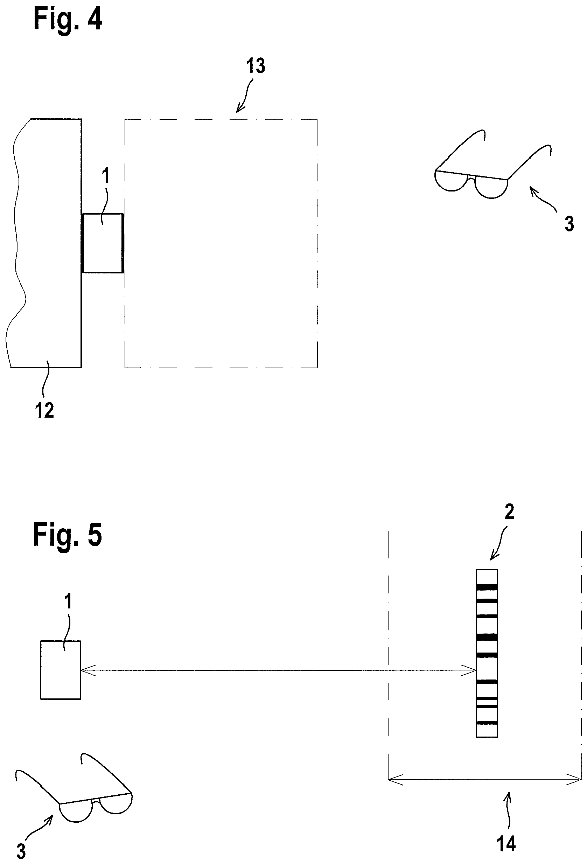

Figur 4 zeigt einen an einer Maschine 12 angeordneten Sensor 1 in Form eines Sicherheitssensors. Der Sicherheitssensor kann beispielsweise als scannender Distanzsensor ausgebildet sein, mittels dessen das Vorfeld 13 der Maschine 12, welches einen Gefahrenbereich bildet, überwacht wird. Für den Sicherheitssensor wird ein Schutzfeld 13 vorgegeben, wie in Figur 4 dargestellt. Mit dem Sicherheitssensor wird dann erfasst, ob ein Objekt in das Schutzfeld 13 eindringt. Ist dies der Fall, liegt eine Gefahrensituation vor, so dass der Sicherheitssensor ein Schaltsignal generiert, mit dem die Maschine 12 stillgesetzt wird, um Gefährdungen für Personen zu vermeiden. Dem Schutzfeld 13 kann ein Warnfeld (in Figur 4 nicht dargestellt) vorgelagert sein, wobei mit dem Sicherheitssensor auch ein Einbringen von Objekten in das Warnfeld überwacht wird.

Mit der Datenbrille 3 wird zunächst der Sicherheitssensor identifiziert. Anhand der Identifizierung gibt die Datenmodelleinheit alleine oder über die Kommunikation mit dem Sicherheitssensor das Schutzfeld bekannt, das dann mit der Projektionseinheit 6 der Datenbrille 3 im Umgebungsbild visualisiert wird und so vom Benutzer kontrolliert und bei Bedarf geändert werden kann.

Figur 5 zeigt eine Ausführungsform eines Sensors 1 in Form eines Barcodelesegerätes. Mit dem Barcodelesegerät wird ein Barcode erfasst, der ein Applikationsobjekt 2 bildet. Je nach Codeart des Barcodes kann dieser in einem bestimmten Lesebereich 14 vom Barcodelesegerät erfasst werden. Nach Identifizierung des Barcodelesegerätes wird in der Datenmodelleinheit hierfür der Lesebereich 14 berechnet und mit der Projektionseinheit 6 angezeigt. Über die Kommunikation der Datenbrille mit dem Barcodelesegerät kann der gelesene Barcode mit seinen Zusatzdaten ebenfalls mit der Projektionseinheit 6 angezeigt werden. Für eine mit der 3D-Kamera 4 der Datenbrille 3 durchzuführende Lagebestimmung von Objekten wird ein geeigneter Bezugspunkt für ein Koordinatensystem gewählt. Dieser Bezugspunkt kann vom Sensor 1 oder auch einem markanten Bereich im Raum gebildet sein.

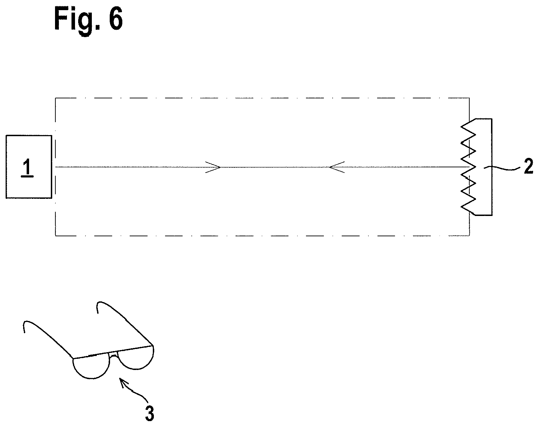

Figur 6 zeigt einen Sensor 1 in Form einer Reflexionslichtschranke. Der Reflexionslichtschranke ist ein Retroreflektor zugeordnet, der ein Applikationsobjekt 2 bildet. Mit der Datenbrille 3 werden die Reflexionslichtschranke und der Retroreflektor identifiziert. Als sensorspezifische Informationen werden dann Kenngrößen wie Bauart und Größe des Retroreflektors aus der Datenmodelleinheit ausgelesen und mit der Projektionseinheit 6 der Datenbrille 3 visualisiert. Da mit den Mitteln zur Entfernungsbestimmung und zur Bildaufhahme der Datenbrille 3 auch die Relativlage von Reflexionslichtschranke und Retroreflektor berechnet wird, kann diese mit einem Rastermaß oder dergleichen visualisiert werden, um so die Ausrichtung von Reflexionslichtschranke und Retroreflektoren zu erleichtern. Entsprechend zur Ausführungsform gemäß Figur 5 wird auch in diesem Fall ein geeigneter Bezugspunkt für ein Koordinatensystem gewählt.

### Bezugszeichenliste

- (1): Sensor
- (2): Applikationsobjekt
- (3): Datenbrille
- (4): 3D-Kamera
- (5): Farbkamera
- (6): Projektionseinheit
- (7): Lichtstrahlen
- (8): Steuer- und Auswerteeinheit
- (9): Schnittstelle
- (10): Internet
- (11): Cloud
- (12): Maschine
- (13): Schutzfeld
- (14): Lesebereich
- (15): interne Datenmodelleinheit
- (16): Eingabeeinheit
- (17): externe Datenmodelleinheit
- (18): Firewall
- (19): internes Datennetzwerk

## Patentansprüche

1. Sensoranordnung mit einer Datenbrille (3) umfassend Mittel zur Entfernungsbestimmung und zur Bildaufnahme innerhalb eines Raumbereichs, sowie eine Projektionseinheit (6) und eine Steuer- und Auswerteeinheit (8), und mit wenigstens einem Sensor (1), wobei der in einem Umgebungsbild der Datenbrille (3) sichtbare Sensor (1) mittels der Mittel zur Entfernungsbestimmung und zur Bildaufnahme identifiziert ist, und wobei mittels der Projektionseinheit (6) sensorspezifische Informationen dieses Sensors (1) in das Umgebungsbild projiziert und angezeigt werden.

2. Sensoranordnung nach Anspruch 1, **dadurch gekennzeichnet, dass** dem Sensor (1) wenigstens ein Applikationsobjekt (2) zugeordnet ist, wobei das in einem Umgebungsbild der Datenbrille (3) sichtbare Applikationsobjekt (2) mittels der Mittel zur Entfernungsbestimmung und zur Bildaufnahme identifiziert ist, und wobei mittels der Projektionseinheit (6) applikationsobjektspezifische Informationen in das Umgebungsbild projiziert und angezeigt werden.

3. Sensoranordnung nach Anspruch 2, **dadurch gekennzeichnet, dass** der Sensor (1) und das Applikationsobjekt (2) in einem oder in verschiedenen Umgebungsbildern sichtbar sind.

4. Sensoranordnung nach einem der Ansprüche 2 oder 3, **dadurch gekennzeichnet, dass** mittels der Mittel zur Entfernungsbestimmung und zur Bildaufhahme der Abstand des Sensors (1) und des Applikationsobjekts (2) und/oder deren Relativlagen und/oder den Lagen im Raum bestimmt werden.

5. Sensoranordnung nach einem der Ansprüche 1 bis 4, **dadurch gekennzeichnet, dass** die Mittel zur Entfernungsbestimmung und zur Bildaufnahme von einer 3D-Kamera (4) sowie einer Farbkamera (5) gebildet sind.

6. Sensoranordnung nach einem der Ansprüche 1 bis 5, **dadurch gekennzeichnet, dass** die Datenbrille (3) eine Schnittstelle (9) zum Anschluss an eine externe Einheit aufweist.

7. Sensoranordnung nach Anspruch 6, **dadurch gekennzeichnet, dass** die Schnittstelle (9) eine Kommunikationseinheit zum Anschluss an das Internet (10) aufweist.

8. Sensoranordnung nach einem der Ansprüche 6 oder 7, **dadurch gekennzeichnet, dass** die Schnittstelle (9) eine Datenverbindung zwischen der Datenbrille (3) und dem Sensor (1) ausbildet.

9. Sensoranordnung nach einem der Ansprüche 1 bis 8, **dadurch gekennzeichnet, dass** eine Datenmodelleinheit (15, 17) zur Vorgabe von sensorspezifischen Informationen vorgesehen ist.

10. Sensoranordnung nach Anspruch 9, **dadurch gekennzeichnet, dass** mittels der Datenmodelleinheit (15, 17) applikationsobjektspezifische Informationen vorgebbar sind.

11. Sensoranordnung nach einem der Ansprüche 9 oder 10, **dadurch gekennzeichnet, dass** die Datenmodelleinheit (15, 17) eine Datenbank zur Speicherung von Informationen und/oder eine Berechnungseinheit zur Berechnung von Informationen aufweist.

12. Sensoranordnung nach Anspruch 11, **dadurch gekennzeichnet, dass** in der Datenmodelleinheit (15, 17) sensorspezifische Informationen oder applikationsobjektspezifische Informationen in Abhängigkeit von mittels von den Mitteln zur Entfernungsbestimmung und zur Bildaufnahme generierten Messwerten und/oder von aus dem Sensor (1) ausgelesenen Daten berechnet werden.

13. Sensoranordnung nach einem der Ansprüche 9 bis 12, **dadurch gekennzeichnet, dass** die Datenmodelleinheit (15,17) in der Datenbrille (3), in dem Sensor (1) oder in einer externen Einheit (17) vorgesehen ist.

14. Sensoranordnung nach Anspruch 13, **dadurch gekennzeichnet, dass** die Datenmodelleinheit (15, 17) in einer Cloud (11) hinterlegt ist.

15. Sensoranordnung nach einem der Ansprüche 1 bis 14, **dadurch gekennzeichnet, dass** mittels der Datenbrille (3) unterschiedliche Sensoren (1) zur Auswahl angezeigt sind.

16. Sensoranordnung nach einem der Ansprüche 1 bis 15, **dadurch gekennzeichnet, dass** der Datenbrille (3) eine Eingabeeinheit (16) zugeordnet ist.

17. Sensoranordnung nach einem der Ansprüche 1 bis 16, **dadurch gekennzeichnet, dass** die Datenbrille (3) durch Gesten steuerbar ist.

18. Sensoranordnung nach einem der Ansprüche 16 und 17, **dadurch gekennzeichnet, dass** mittels der Eingabeeinheit (16) und/oder der Gestensteuerung ein Sensor (1) auswählbar ist.

19. Sensoranordnung nach einem der Ansprüche 1 bis 18, **dadurch gekennzeichnet, dass** als sensorspezifische Informationen Arbeitszustände des Sensors (1) dargestellt sind.

20. Sensoranordnung nach einem der Ansprüche 1 bis 19, **dadurch gekennzeichnet, dass** mittels sensorspezifischer Informationen und/oder applikationsobjektspezifischer Informationen eine Ausrichtung eines Sensors (1) und/oder eines Applikationsobjekts (2) durchführbar ist.

21. Sensoranordnung nach einem der Ansprüche 1 bis 20, **dadurch gekennzeichnet, dass** sensorspezifische Informationen und/oder applikationsobjektspezifische Informationen Diagnosedaten bilden.

22. Sensoranordnung nach einem der Ansprüche 1 bis 21, **dadurch gekennzeichnet, dass** in einem Kalibriermodus die Datenbrille (3) kalibrierbar ist.
